# FASCICULE DE BREVET EUROPEEN

(11) **EP 1 886 496 B1**
(45) Date de publication et mention de la délivrance du brevet: **02.08.2017**
(21) Numéro de dépôt: 06764724.8
(22) Date de dépôt: 02.06.2006
(51) Int. Cl.: H04N 7/14, H04M 1/27

(54) **PROCEDE ET DISPOSITIF DE COMMANDE D'UN DEPLACEMENT D'UNE LIGNE DE VISEE, SYSTEME DE VISIOCONFERENCE, TERMINAL ET PROGRAMME POUR LA MISE EN OEUVRE DU PROCEDE**
VERFAHREN UND EINRICHTUNG ZUR STEUERUNG DER BEWEGUNG EINER SICHTLINIE, VIDEOKONFERENZSYSTEM, ENDGERÄT UND PROGRAMM ZUR IMPLEMENTIERUNG DES VERFAHRENS
METHOD AND DEVICE FOR CONTROLLING THE MOVEMENT OF A LINE OF SIGHT, VIDEOCONFERENCING SYSTEM, TERMINAL AND PROGRAMME FOR IMPLEMENTING SAID METHOD

(30) Priorité: 03.06.2005 FR 0505656
(43) Date de publication de la demande: 13.02.2008
(73) Titulaire: Orange, 75015 Paris (FR)
(72) Inventeur: BRUNO, Adrien, F-06130 Grasse (FR)
(74) Mandataire: Cabinet Plasseraud
(86) Numéro de dépôt international: PCT/FR2006/001257
(87) Numéro de publication internationale: WO 2006/129023

(56) Documents cités:
- EP-A- 0 884 905
- US-A- 5 396 287
- US-A- 5 594 494
- US-A1- 2003 090 564
- US-A1- 2004 008 264
- US-B1- 6 532 447
- US-B1- 6 707 489

## Description

La présente invention concerne un procédé et un dispositif de commande d'un déplacement d'une ligne de visée, un système de visioconférence, un terminal et un programme pour la mise en oeuvre du procédé.

Il existe des procédés de commande d'un déplacement d'une ligne de visée d'une caméra montée sur un terminal mobile de visioconférence. Par exemple, un des procédés existant consiste à déterminer la position d'une zone cible dans l'image filmée par la caméra puis à commander le déplacement de la ligne de visée de la caméra en fonction de la position déterminée pour que la ligne de visée suive cette zone cible. La zone cible est typiquement le visage de l'utilisateur du terminal mobile de visioconférence. Dans ces conditions, le visage de l'utilisateur est toujours au centre de l'image.

Toutefois, en cas de mouvement brusque du terminal mobile ou de l'utilisateur, la zone cible peut sortir du cadre de l'image filmée. Il n'est alors plus possible de commander un déplacement de la ligne de visée.
De tels procédés/dispositifs de commande d'un déplacement d'une ligne de visée d'une caméra, connus de l'état de la technique, sont décrits, par exemple, dans les documents brevets suivants : US 2004 008264 A1, US 5 594 494 A,US 6 532 447 B1, US 6 707 489 B1, US 5 396 287 A.

L'invention vise à remédier à cet inconvénient en proposant un autre procédé de commande du déplacement de la ligne de visée permettant de diriger automatiquement celle-ci vers le visage de l'utilisateur.

L'invention a donc pour objet un tel procédé de commande selon la revendication 1.

Le procédé ci-dessus de commande ne nécessite aucune analyse de l'image filmée et peut fonctionner même si le terminal mobile ou l'utilisateur se déplace rapidement l'un par rapport à l'autre.

Les modes de réalisation de ce procédé de commande peuvent comporter une ou plusieurs des caractéristiques suivantes :
d) une étape de comparaison du ou des sons enregistrés par les microphones lors de l'étape a) à au moins une expression prédéfinie en langage naturel associé à une ou plusieurs instructions de commande du terminal mobile et, e) si le ou les sons enregistrés et comparés correspondent à une expression prédéfinie, une étape d'exécution de chaque instruction de commande associée à cette expression prédéfinie ;
   - une étape f) de détermination de la position d'une zone cible dans une image filmée par la caméra, une étape g) de commande du déplacement de la ligne de visée en fonction de la position déterminée lors de l'étape f) pour que la zone cible se rapproche du centre de l'image filmée par la caméra, et les étapes a) à c) sont automatiquement exécutées si la position de la zone cible ne peut pas être déterminée lors de l'étape f) ;
   - l'étape c) ou g) consiste à commander un moteur propre à déplacer un objectif de la caméra dont l'axe optique forme la ligne de visée ;
   - l'étape c) ou g) consiste à sélectionner uniquement les images filmées par un ou plusieurs objectifs fixes de la caméra pour obtenir une image correspondant à celle qui serait filmée à partir d'un objectif de caméra dont l'axe optique serait confondu avec la ligne de visée.

Ces modes de réalisation du procédé de commande présentent en outre les avantages suivants :
- utiliser les mêmes sons enregistrés par les microphones pour commander à la fois le déplacement de la ligne de visée et une autre fonction du terminal permet à l'utilisateur de déclencher l'exécution de deux tâches différentes à l'aide d'une seule et même expression vocale, ce qui facilite l'utilisation du terminal,
- commander le déplacement de la ligne de visée de la caméra en fonction d'au moins un son prononcé par l'utilisateur du terminal mobile permet de palier à l'inopérabilité d'une autre méthode de commande basée sur le suivi d'une zone cible.

L'invention a également pour objet un dispositif de commande d'un déplacement de la ligne de visée d'une caméra montée sur un terminal mobile de visioconférence selon la revendication 5.

L'invention a également pour objet un système de visioconférence selon la revendication 7.

L'invention a également pour objet un terminal mobile de visioconférence équipé du dispositif de commande ci-dessus.

L'invention a également pour objet un programme d'ordinateur pour la mise en oeuvre du procédé de commande ci-dessus.

L'invention sera mieux comprise à la lecture de la description qui va suivre, donnée uniquement à titre d'exemple et faite en se référant aux dessins sur lesquels :
- la figure 1 est une illustration schématique d'un système de visioconférence ;
- la figure 2 est un organigramme d'un procédé de visioconférence mis en oeuvre dans le système de la figure 1 ; et
- la figure 3 est une illustration schématique d'un autre mode de réalisation d'un système de visioconférence.

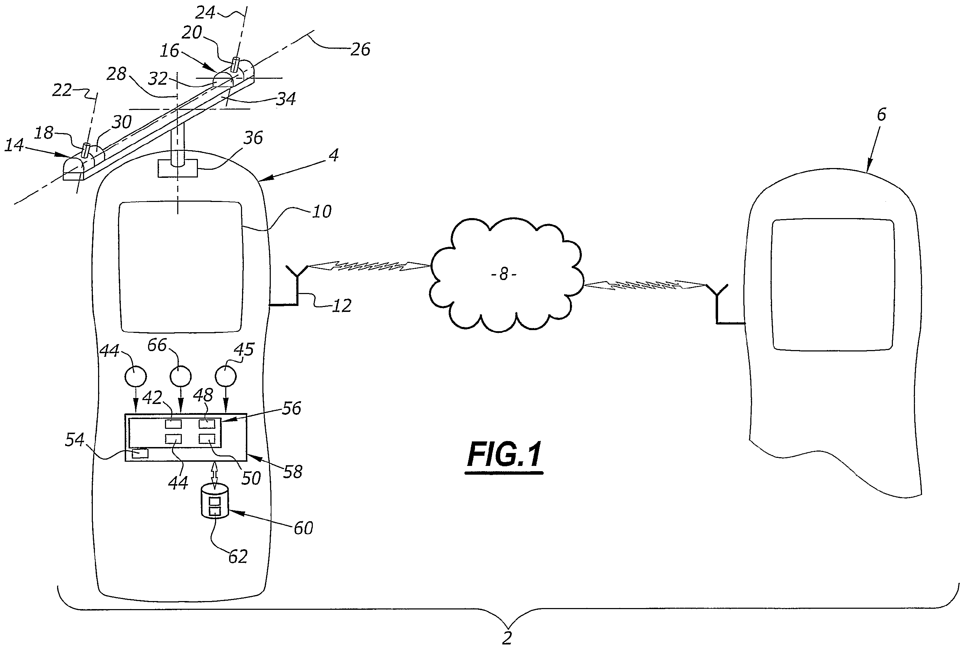

La figure 1 représente un système 2 de visioconférence entre deux terminaux mobiles 4 et 6 de visioconférence par l'intermédiaire d'un réseau 8 de transmission d'informations.

Le réseau 8 est, par exemple, un réseau GSM (Global System for Mobile Communication), un réseau GPRS (General Packet Radio Services), un réseau UMTS (Universal Mobile Télécommunication System) ou encore un réseau local sans fil Wifi (Wireless Local area Network).

Pour simplifier la description, les terminaux 4 et 6 sont considérés comme étant identiques et seul le terminal 4 sera décrit en détail.

Le terminal 4 est apte à échanger par l'intermédiaire du réseau 8 des données de visioconférence avec le terminal 6. Ici, le terminal 4 est un téléphone mobile équipé d'un écran tactile 10 et d'une antenne 12.

Seuls les éléments du terminal 4 nécessaires à la compréhension de l'invention seront décrits ici en détail.

Le terminal 4 est équipé de deux caméras 14 et 16 destinées à filmer le visage de l'utilisateur du terminal 4. Chacune des caméras 14, 16 comprend un objectif respectivement 18 et 20. L'axe optique des objectifs 18 et 20 forme une ligne de visée, respectivement 22 et 24 des caméras 14 et 16.

Les objectifs 18, 20 sont déplaçables en rotation autour de deux axes orthogonaux 26 et 28 pour déplacer les lignes de visée 22, 24. Les axes 26 et 28 sont solidaires du terminal 4.

Les objectifs 18, 20 sont déplacés en rotation autour de l'axe 26 par des moteurs commandables, respectivement 30 et 32.

Les caméras 14 et 16 et les moteurs 30 et 32 sont montés sur une poutre tournante 34 autour de l'axe 28.

Pour faire tourner la poutre 34 autour de l'axe 28, le terminal 4 comporte un moteur commandable 36.

Le déplacement des objectifs 18, 20 sont commandés pour que chacun des objectifs filme le même objet à partir d'un point de vue spatialement espacé de celui de l'autre objectif, de manière à pouvoir à partir des deux images filmées, reconstituer une image en trois dimensions.

Le terminal 4 comprend également un dispositif de commande du déplacement des lignes de visée 22 et 24. Ce dispositif de commande comporte notamment :
- un module 42 de détermination de la position d'une zone cible dans l'image filmée par chacune des caméras,
- un module de commande 44 du déplacement des lignes de visée 22 et 24 en fonction de la position déterminée par le module 42,
- une paire de microphones 44, 45 spacialement espacés l'un de l'autre et propres chacun à enregistrer la voix de l'utilisateur du terminal 4,
- un module 48 d'établissement à partir des enregistrements des microphones 44, 45 d'une direction dans laquelle se trouve la bouche de l'utilisateur du terminal 4, et
- un module 50 de commande du déplacement des lignes de visée 22 et 24 pour les aligner sur la direction établie par le module 48,

Le terminal 4 a aussi un module 54 de reconnaissance vocale apte à comparer le ou les sons enregistrés par les microphones 44, 45 à au moins une expression préenregistrée en langage naturel, et à déclencher automatiquement l'exécution d'une ou de plusieurs instructions de commande par l'un des terminaux 4 et/ou 6.

Plus précisément, le module 54 est apte à décrocher automatiquement s'il reconnaît dans les sons enregistrés par les microphones 44 et 45 l'expression prédéfinie « Allo ». Le module 54 est également apte à déclencher automatiquement la numérotation d'un numéro de téléphone sélectionné au préalable si ce module 54 reconnaît une autre expression prédéfinie telle que « Appeler » dans les sons enregistrés par les microphones 44 et 45.

Les modules 42, 44, 48 et 50 sont regroupés dans une unité 56 de commande des moteurs 30, 32 et 36 pour commander le déplacement des lignes de visée 22 et 24.

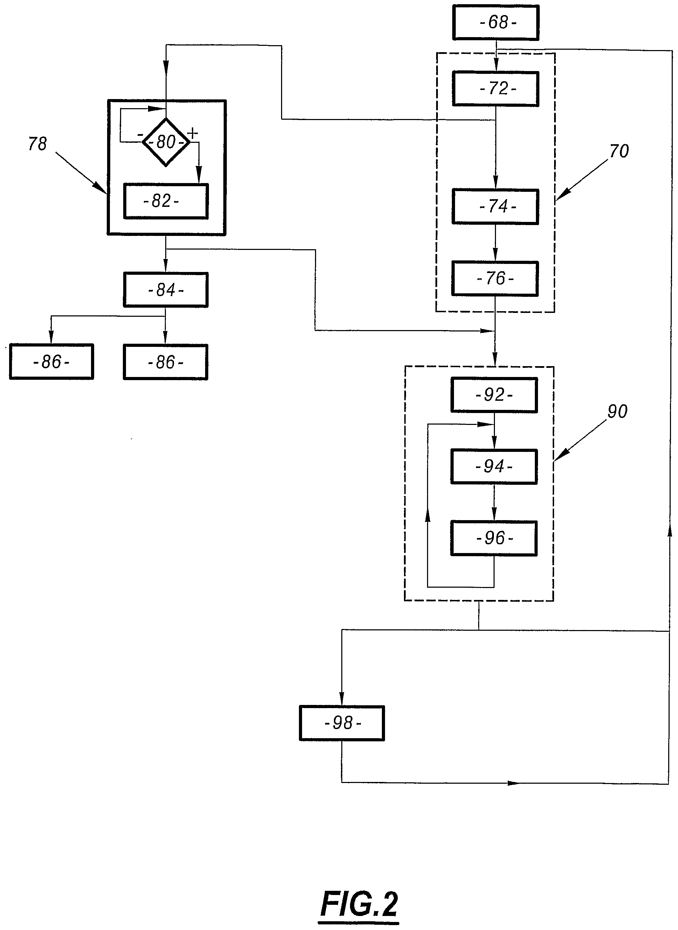

L'unité de commande 56 et le module 54 sont implémentés dans un calculateur électronique 58 du terminal 4. Le calculateur 58 est un calculateur programmable apte à exécuter un programme d'ordinateur comportant des instructions de code pour la mise en oeuvre du procédé de la figure 2. Le programme d'ordinateur est, par exemple, enregistré dans une mémoire 60 raccordée au calculateur 58. La mémoire 60 comprend également un dictionnaire 62 contenant les expression prédéfinies en langage naturel reconnaissables par le module 54 ainsi que les instructions de commande du terminal 4 ou 6 associées à chacune des expressions prédéfinies.

Enfin, le dispositif de commande du terminal 4 comprend un bouton 66 actionnable par l'utilisateur du terminal 4. Ce bouton 66 est raccordé au calculateur 58 et permet d'envoyer au terminal 6 une commande d'activation manuelle des modules 48 et 50 du terminal 6.

Le fonctionnement du système 2 va maintenant être décrit en regard du procédé de la figure 2 dans le cas particulier du terminal 4.

Au début du procédé, lors d'une étape 68, l'utilisateur du terminal 4 saisit ou sélectionne un numéro de téléphone puis prononce l'expression « Appeler ».

Le terminal 4 procède alors automatiquement à une phase 70 d'orientation des lignes de visée 22, 24 par la voix.

Au début de la phase 70, lors d'une étape 72, les microphones 44 et 45 enregistrent les sons prononcés par l'utilisateur du terminal 4. Ces sons correspondent ici à l'expression « Appeler ».

Ensuite, lors d'une étape 74, le module 48 établit la direction dans laquelle se trouve la bouche de l'utilisateur à partir des enregistrements réalisés lors de l'étape 72. Ceci est rendu possible par le fait que les microphones 44 et 45 sont spatialement espacés l'un de l'autre, de sorte qu'en fonction de la position de la bouche de l'utilisateur, le son prononcé par cet utilisateur ne mettra pas le même temps pour se propager jusqu'aux microphones 44 et 45, ce qui permet d'établir la direction dans laquelle se trouve la bouche de l'utilisateur.

Une fois cette direction établie, lors d'une étape 76, le module 50 commande les moteurs 30, 32 et 36 pour déplacer les lignes de visée 22, 24 et atteindre une position dans laquelle ces lignes sont alignées avec la direction précédemment établie, les objectifs 18, 20 étant tournés vers la bouche de l'utilisateur.

La phase 70 permet donc de diriger initialement les lignes de visée 22 et 24 vers le visage de l'utilisateur du terminal 4.

En parallèle à la phase 70, le terminal 4 exécute simultanément une étape 78 de reconnaissance vocale d'instructions de commande à partir des mêmes sons que ceux enregistrés lors de l'étape 72.

Au début de l'étape 78, lors d'une opération 80, le module 54 de reconnaissance vocale compare les sons enregistrés les microphones 44 et 45 aux expressions contenues dans le dictionnaire 62.

Dans le cas où les sons enregistrés correspondent à l'une des expressions du dictionnaire 62, le module 54 déclenche l'exécution des instructions de commande associées à l'expression prédéfinie reconnue, lors d'une opération 82. Par exemple, ici, l'expression « Appeler » est reconnue de sorte que lors de l'opération 82, le terminal 4 compose automatiquement le numéro saisi ou sélectionné lors de l'étape 68.

A la suite de cette description, on supposera que le numéro saisi ou sélectionné lors de l'étape 68 est celui du terminal 70.

Ainsi, après l'étape 78, le terminal 6 sonne.

Pour décrocher, l'utilisateur du terminal 6 prononce, lors d'une étape 84, l'expression « Allo ».

Le terminal 6 exécute alors en parallèle, une phase 86 d'orientation des lignes de visée des caméras de son terminal par la voix et à une étape 88 de reconnaissance vocale d'instruction de commande.

La phase 86 et l'étape 88 sont par exemple identiques respectivement à la phase 70 et à l'étape 78. On notera cependant que, l'expression « Allo » enregistrée dans le dictionnaire 62 est associée à des instructions de commande permettant au terminal de prendre la ligne (décrocher). Ainsi, à l'issue de la phase 86 de l'étape 88, les lignes de visée du terminal 6 sont dirigées vers le visage de l'utilisateur de ce terminal et le terminal 6 a pris la ligne.

Après la phase 70 et l'étape 78, lors d'une phase 90, l'orientation des lignes de visée 22, 24 est commandée par suivi d'une zone cible dans l'image filmée.

Par défaut, la zone cible correspond à un visage. Toutefois, l'utilisateur du terminal 6 peut sélectionner, lors d'une étape 92, une zone cible différente par contact sur l'écran tactile de son téléphone. Les caractéristiques de la zone cible ainsi sélectionnée sont alors transmises au terminal 4 qui les utilise en lieu et place de celles mémorisées par défaut.

La position de cette zone cible est automatiquement déterminée, lors d'une étape 94, par le module 42.

Ensuite, lors d'une étape 96, en fonction de cette position déterminée, le module 44 commande les moteurs 30, 32 et 36 pour déplacer les lignes de visée 22 et 24, de manière à ce que celles-ci passent par le centre de la zone cible.

Les étapes 94 et 96 sont réitérées en permanence, de manière à maintenir le visage de l'utilisateur du terminal 4 au centre des images filmées par les caméras 14 et 16.

Les traitements d'images mis en oeuvre pour déterminer la position de la zone cible sont lents. Par conséquent, si l'utilisateur déplace brusquement le terminal 4 ou si l'utilisateur se déplace, ou déplace brusquement son visage, la zone cible peut sortir du cadre des images filmées par les caméras 14 et 16 et l'étape 94 devient alors impossible à réaliser. Dans ces conditions, le terminal 4 retourne automatiquement à la phase 70, par exemple.

Le procédé retourne automatiquement à la phase 90 dès que la zone cible est de nouveau présente dans l'image filmée.

Lorsque la zone cible est sortie du cadre des images filmées, l'utilisateur du terminal 6 a également la possibilité, lors d'une étape 98, d'enfoncer le bouton 66 de son terminal pour relancer la phase 70 d'orientation des lignes de visée du terminal 4 par la voix.

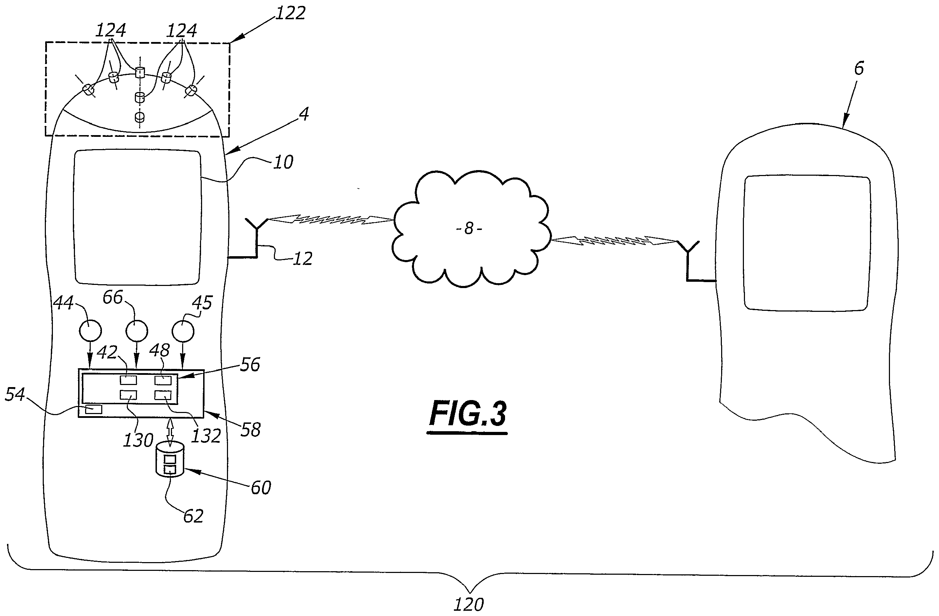

La figure 3 représente un autre système 120 de visioconférence. Ce système 120 est identique au système 2 à l'exception du fait que les caméras 14, 16, la poutre 34, et les moteurs 30, 32 et 36 sont remplacés par une seule caméra 122 à plusieurs objectifs.

Sur la figure 3, les éléments déjà décrits en regard de la figure 2 portent les mêmes références numériques.

La caméra 122 comporte, par exemple, neuf objectifs 124, correspondant chacun à une ligne de visée orientée dans une direction spatiale différente de celle des autres. Sur la figure 3, seuls sept des neufs objectifs 124 sont visibles. Ces objectifs 124 sont fixes et non déplaçables par rapport au corps du terminal 4.

Les autres éléments du terminal 4 sont identiques à ceux décrits en regard de la figure 1 à l'exception des modules 44 et 50 qui sont respectivement remplacés par des modules 130 et 132. Ces modules 130 et 132 diffèrent respectivement des modules 44 et 50 par le fait que le déplacement de la ligne de visée de la caméra 122 consiste à sélectionner le ou les objectifs 124 les plus proches de la ligne de visée souhaitée, puis à combiner les images filmées par les objectifs sélectionnés pour construire une image identique à l'image qui aurait été filmée à partir de la ligne de visée souhaitée. Ainsi, dans le mode de réalisation de la figure 3, le déplacement de la ligne de visée de la caméra est obtenu sans déplacement mécanique d'objectifs.

De nombreux autres modes de réalisation des systèmes 2 et 120 sont possibles. Par exemple, les modules 42, 44, 48, 50 et 54 du dispositif de commande du déplacement des lignes de visée 22 et 26 sont implémentés dans le terminal distant, c'est-à-dire, dans le terminal 6, de manière à ce que le déplacement de ces lignes de visée soit commandé à distance. Seul les microphones 44, 45 doivent être maintenus dans le terminal 4. Les enregistrements des microphones 44, 45 sont alors transmis aux modules correspondant par l'intermédiaire du réseau 8.

Si une image en trois dimensions ne doit pas être reconstituée, le terminal 4 peut être simplifié en supprimant l'une des caméras 14 ou 16.

Dans le terminal 4 du système 120, si le nombre d'objectifs 124 est très élevé et permet de couvrir avec une précision suffisante quasiment toutes les directions de visée possibles, l'étape de déplacement de la ligne de visée consiste alors uniquement à sélectionner l'objectif ayant l'axe optique le plus proche de la ligne de visée souhaitée.

Les systèmes 2 et 120 ont été décrits dans le cas particulier où la visioconférence est établie uniquement entre deux terminaux. Toutefois, en variante, une visioconférence peut être établie entre plus de deux terminaux mobiles.

La commande du déplacement de la ligne de visée par la voix peut être mise en oeuvre indépendamment des autres moyens de commande du déplacement de la ligne de visée décrits ici. Par exemple, en variante, la phase 90 est supprimée et la phase 70 est réitérée à plusieurs reprise pour maintenir la ligne de visée dirigée vers le visage de l'utilisateur.

## Revendications

1. Procédé de commande d'un déplacement d'une ligne de visée d'une caméra montée sur un terminal mobile de visioconférence, **caractérisé en ce que** ce procédé comporte :
f) une étape (82) de détermination dans une image filmée par la caméra de la position d'une zone cible préalablement sélectionné, et
g) une étape (84) de commande du déplacement de la ligne de visée en fonction de la position déterminée lors de l'étape f) pour que la zone cible se rapproche du centre de l'image filmée par la caméra,
et **en ce que**, si la position de la zone cible ne peut pas être déterminée lors de l'étape f), le procédé comporte en outre :
a) une étape (72) d'enregistrement par au moins deux microphones spatialement espacés l'un de l'autre et solidaires du terminal mobile, d'au moins un même son prononcé par un utilisateur du terminal mobile,
b) une étape (74) d'établissement à partir de l'enregistrement de chacun des microphones d'une direction dans laquelle se trouve la bouche de l'utilisateur, et
c) une étape (76) de commande du déplacement de la ligne de visée en fonction de la direction établie lors de l'étape b).

2. Procédé selon la revendication 1, **caractérisé en ce que** le procédé comporte :
d) une étape (80) de comparaison du ou des sons enregistrés par les microphones lors de l'étape a) à au moins une expression prédéfinie en langage naturel associée à une ou plusieurs instructions de commande du terminal mobile et,
e) si le ou les sons enregistrés et comparés correspondent à une expression prédéfinie, une étape (82) d'exécution de chaque instruction de commande associée à cette expression prédéfinie.

3. Procédé selon l'une quelconque des revendications précédentes, **caractérisé en ce que** l'étape c) ou g) consiste à commander un moteur propre à déplacer un objectif de la caméra dont l'axe optique forme la ligne de visée.

4. Procédé selon l'une quelconque des revendications 1 à 2, **caractérisé en ce que** l'étape c) ou g) consiste à sélectionner uniquement les images filmées par un ou plusieurs objectifs fixes de la caméra pour obtenir une image correspondant à celle qui serait filmée à partir d'un objectif de caméra dont l'axe optique serait confondu avec la ligne de visée.

5. Dispositif de commande d'un déplacement d'une ligne de visée d'une caméra (14, 16 ; 122) montée sur un terminal mobile de visioconférence, **caractérisé en ce que** ce dispositif comporte :
- au moins deux microphones (44, 45) spatialement espacés l'un de l'autre et solidaires du terminal mobile propres chacun à enregistrer au moins un même son prononcé par un utilisateur du terminal mobile,
- un module (48) d'établissement à partir de l'enregistrement de chacun des microphones d'une direction dans laquelle se trouve la bouche de l'utilisateur, et
- un module (50) de commande du déplacement de la ligne de visée en fonction de la direction établie par le module d'établissement, et
- un module (42) de détermination de la position d'une zone cible dans une image filmée par la caméra, et
- un module de commande du déplacement de la ligne de visée en fonction de la position déterminée par le module de détermination,
et **en ce que** ce dispositif est adapté pour exécuter le procédé de commande conforme à la revendication 1.

6. Dispositif selon la revendication 5, **caractérisé en ce que** le dispositif comporte un module (54) de reconnaissance vocale apte à comparer le ou les sons enregistrés par les microphones à au moins une expression prédéfinie en langage naturel associée à une ou plusieurs instructions de commande du terminal mobile, et à déclencher l'exécution par le terminal mobile de la ou des instructions de commande associées à l'une des expressions prédéfinies si le ou les sons enregistrés et comparés correspondent à cette expression prédéfinie.

7. Système de visioconférence comportant :
- un premier et un second terminaux mobiles (4, 6) de visioconférence équipés chacun d'au moins une caméra dont le déplacement de la ligne de visée est commandable, les terminaux mobiles étant aptes à échanger par l'intermédiaire d'un réseau (8) de transmission d'informations des données de visioconférence,
**caractérisé en ce que** ce système comprend un dispositif de commande du déplacement de la ligne de visée d'une des caméras sur le premier ou le second terminal conforme à la revendication 5 ou 6.

8. Terminal mobile de visioconférence, **caractérisé en ce que** ce terminal est équipé d'un dispositif de commande d'un déplacement d'une ligne de visée conforme à la revendication 5 ou 6.

9. Programme d'ordinateur, **caractérisé en ce qu'**il comporte des instructions pour l'exécution d'un procédé de commande conforme à l'une quelconque des revendications 1 à 4, lorsque ces instructions sont exécutées par un calculateur électronique.

## Patentansprüche

1. Verfahren zur Steuerung einer Bewegung einer Sichtlinie einer Kamera, die auf einem mobilen Videokonferenzterminal montiert ist, **dadurch gekennzeichnet, dass** das Verfahren umfasst:
f) einen Schritt (82) der Bestimmung der Position einer vorher ausgewählten Zielzone in einem von der Kamera gefilmten Bild,
und
g) einen Schritt (84) der Steuerung der Bewegung der Sichtlinie in Abhängigkeit von der in Schritt f) bestimmten Position, damit sich die Zielzone der Mitte des von der Kamera gefilmten Bildes annähert,
und dass, wenn die Position der Zielzone in Schritt f) nicht bestimmt werden kann, das Verfahren ferner umfasst:
a) einen Schritt (72) der Aufzeichnung mindestens eines selben Tons, der von einem Benutzer des mobilen Terminals ausgesprochen wird, durch mindestens zwei räumlich voneinander getrennte und mit dem mobilen Terminal verbundene Mikrofone,
b) einen Schritt (74) der Erstellung einer Richtung, in der sich der Mund des Benutzers befindet, auf Basis der Aufzeichnung jedes der Mikrofone,
und
c) einen Schritt (76) der Steuerung der Bewegung der Sichtlinie in Abhängigkeit von der in Schritt b) erstellten Richtung.

2. Verfahren nach Anspruch 1, **dadurch gekennzeichnet, dass** das Verfahren umfasst:
d) einen Schritt (80) des Vergleichs des oder der von den Mikrofonen in Schritt a) aufgezeichneten Töne mit mindestens einem vordefinierten Ausdruck in natürlicher Sprache, der einem oder mehreren Steuerbefehlen des mobilen Terminals zugeordnet ist, und
e) wenn der oder die aufgezeichneten und verglichenen Töne einem vordefinierten Ausdruck entsprechen, einen Schritt (82) der Ausführung jedes diesem vordefinierten Ausdruck zugeordneten Steuerbefehls.

3. Verfahren nach einem der vorhergehenden Ansprüche, **dadurch gekennzeichnet, dass** der Schritt c) oder g) darin besteht, einen Motor zu steuern, der geeignet ist, ein Objektiv der Kamera, dessen optische Achse die Sichtlinie bildet, zu bewegen.

4. Verfahren nach einem der Ansprüche 1 bis 2, **dadurch gekennzeichnet, dass** der Schritt c) oder g) darin besteht, nur die von einem oder mehreren festen Objektiven der Kamera gefilmten Bilder auszuwählen, um ein Bild entsprechend jenem zu erhalten, das von einem Objektiv der Kamera gefilmt würde, dessen optische Achse mit der Sichtlinie zusammenfällt.

5. Vorrichtung zur Steuerung einer Bewegung einer Sichtlinie einer Kamera (14, 16; 122), die auf einem mobilen Videokonferenzterminal montiert ist, **dadurch gekennzeichnet, dass** die Vorrichtung umfasst:
- mindestens zwei Mikrofone (44, 45), die räumlich voneinander getrennt und mit dem mobilen Terminal verbunden sind, die geeignet sind, jeweils mindestens einen selben Ton aufzuzeichnen, der von einem Benutzer des mobilen Terminals ausgesprochen wird,
- ein Modul (48) zur Erstellung einer Richtung, in der sich der Mund des Benutzers befindet, auf Basis der Aufzeichnung jedes der Mikrofone,
und
- ein Modul (50) zur Steuerung der Bewegung der Sichtlinie in Abhängigkeit von der vom Erstellungsmodul erstellten Richtung, und
- ein Modul (42) zur Bestimmung der Position einer Zielzone in einem von der Kamera gefilmten Bild, und
- ein Modul zur Steuerung der Bewegung der Sichtlinie in Abhängigkeit von der von dem Bestimmungsmodul bestimmten Position,
und dass die Vorrichtung geeignet ist, das Steuerungsverfahren nach Anspruch 1 auszuführen.

6. Vorrichtung nach Anspruch 5, **dadurch gekennzeichnet, dass** die Vorrichtung ein Spracherkennungsmodul (54) umfasst, das geeignet ist, den oder die von den Mikrofonen aufgezeichneten Töne mit mindestens einem vordefinierten Ausdruck in natürlicher Sprache, der einem oder mehreren Steuerbefehlen des mobilen Terminals zugeordnet ist, zu vergleichen und die Ausführung des oder der Steuerbefehle, die einem der vordefinierten Ausdrücke zugeordnet sind, auszulösen, wenn der oder die aufgezeichneten und verglichenen Töne diesem vordefinierten Ausdruck entsprechen.

7. Videokonferenzsystem, umfassend:
- ein erstes und ein zweites mobiles Videokonferenzterminal (4, 6), die jeweils mit mindestens einer Kamera ausgestattet sind, deren Bewegung der Sichtlinie steuerbar ist, wobei die mobilen Terminals geeignet sind, mit Hilfe eines Datenübertragungsnetzes (8) Videokonferenzdaten auszutauschen,
**dadurch gekennzeichnet, dass** das System eine Vorrichtung zur Steuerung der Bewegung der Sichtlinie einer der Kameras auf dem ersten oder dem zweiten Terminal nach Anspruch 5 oder 6 umfasst.

8. Mobiles Videokonferenzterminal, **dadurch gekennzeichnet, dass** das Terminal mit einer Vorrichtung zur Steuerung einer Bewegung einer Sichtlinie nach Anspruch 5 oder 6 ausgestattet ist.

9. Computerprogramm, **dadurch gekennzeichnet, dass** es Befehle für die Ausführung eines Steuerungsverfahrens nach einem der Ansprüche 1 bis 4 umfasst, wenn diese Befehle von einem elektronischen Rechner ausgeführt werden.

## Claims

1. Method for controlling the movement of a line of sight of a camera mounted on a videoconferencing mobile terminal, **characterized in that** this method comprises:
f) a step (82) for determining, in a image filmed by the camera, the position of a previously selected target area,
and
g) a step (84) for controlling the movement of the line of sight as a function of the position determined during the step f) in order to bring the target area closer to the centre of the image filmed by the camera, and **in that**, if the position of the target area cannot be determined during the step f), the method furthermore comprises:
a) a step (72) for recording, by at least two microphones spatially separated from each other and rigidly attached to the mobile terminal, at least one and the same sound pronounced by a user of the mobile terminal,
b) a step (74) for establishing, based on the recording from each of the microphones, a direction in which the mouth of the user is located,
and
c) a step (76) for controlling the movement of the line of sight as a function of the direction established during the step b).

2. Method according to Claim 1, **characterized in that** the method comprises:
d) a step (80) for comparison of the sound or sounds recorded by the microphones during the step a) with at least one predefined expression in natural language associated with one or more control instructions for the mobile terminal and,
e) if the sound or sounds recorded and compared correspond to a predefined expression, a step (82) for execution of each control instruction associated with this predefined expression.

3. Method according to any one of the preceding claims, **characterized in that** the step c) or g) consists in controlling a motor designed to move a lens of the camera whose optical axis forms the line of sight.

4. Method according to either one of Claims 1 and 2, **characterized in that** the step c) or g) consists in selecting only the images filmed by one or more fixed lenses of the camera in order to obtain an image corresponding to that which would be filmed using a camera lens whose optical axis were coincident with the line of sight.

5. Device for controlling a movement of a line of sight of a camera (14, 16; 122) mounted on a mobile videoconference terminal, **characterized in that** this device comprises:
- at least two microphones (44, 45) spatially separated from each other and rigidly attached to the mobile terminal, each being capable of recording at least one and the same sound pronounced by a user of the mobile terminal,
- a module (48) for establishing, based on the recording from each of the microphones, a direction in which the mouth of the user is located,
and
- a module (50) for controlling the movement of the line of sight as a function of the direction established by the direction establishment module, and
- a module (42) for determining the position of a target area in an image filmed by the camera, and
- a module for controlling the movement of the line of sight as a function of the position determined by the determination module,
and **in that** this device is adapted for executing the control method according to Claim 1.

6. Device according to Claim 5, **characterized in that** the device comprises a voice recognition module (54) capable of comparing the sound or sounds recorded by the microphones with at least one predefined expression in natural language associated with one or more instructions for controlling the mobile terminal, and of triggering the execution by the mobile terminal of the control instruction or instructions associated with one of the predefined expressions if the sound or sounds recorded and compared correspond to this predefined expression.

7. Videoconferencing system comprising:
- a first and a second mobile videoconferencing terminal (4, 6) each equipped with at least one camera for which the movement of the line of sight is controllable, the mobile terminals being capable of exchanging videoconferencing data via an information transmission network (8),
**characterized in that** this system comprises a device for controlling the movement of the line of sight of one of the cameras on the first or the second terminal according to either of Claims 5 and 6.

8. Mobile videoconferencing terminal, **characterized in that** this terminal is equipped with a device for controlling a movement of a line of sight according to either of Claims 5 and 6.

9. Computer programme, **characterized in that** it comprises instructions for the execution of a control method according to any one of Claims 1 to 4, when these instructions are executed by an electronic data processor.
